# FASCICULE DE BREVET EUROPEEN

(11) **EP 4 727 357 B1**
(45) Date de publication et mention de la délivrance du brevet: **21.10.2026**
(21) Numéro de dépôt: 25721547.5
(22) Date de dépôt: 24.04.2025
(51) Int. Cl.: A01N 31/02, A01N 65/06, A01N 65/08, A01N 65/10, A01N 65/22, A01N 65/24, A01N 65/28, A01N 65/36, A01N 65/00, A01P 7/02

(54) **COMPOSITION ACARIFUGE ET/OU ACARICIDE À BASE D'HUILES ESSENTIELLES**
MILBENABWEISENDE UND/ODER AKARIZIDE ZUSAMMENSETZUNG AUF BASIS VON ÄTHERISCHEN ÖLEN
MITE-REPELLENT AND/OR ACARICIDAL COMPOSITION BASED ON ESSENTIAL OILS

(30) Priorité: 04.07.2024 BE 202400033
(43) Date de publication de la demande: 22.04.2026
(73) Titulaire: Laboratoire Puressentiel S.A., 1050 Bruxelles (BE)
(72) Inventeur: PACCHIONI, Isabelle, 1050 Bruxelles (BE)
(74) Mandataire: Ipsilon Belgium
(86) Numéro de dépôt international: PCT/EP2025/061281
(87) Numéro de publication internationale: WO 2026/008188

(56) Documents cités:
- EP-A1- 1 249 167
- WO-A1-03/015522
- DE-A1- 19 824 683
- FR-A1- 2 889 909
- JP-A- H04 149 107
- JP-A- S63 104 905
- SERTKAYA E ET AL: "Acaricidal activities of the essential oils from several medicinal plants against the carmine spider mite (Tetranychus cinnabarinus Boisd.) (Acarina: Tetranychidae)", INDUSTRIAL CROPS AND PRODUCTS, ELSEVIER, NL, vol. 31, no. 1, 1 January 2010 (2010-01-01), pages 107 - 112, XP026777153, ISSN: 0926-6690, [retrieved on 20091014], DOI: 10.1016/J.INDCROP.2009.09.009

## Description

### Domaine technique

La présente invention concerne une composition ayant un effet acarifuge et/ou acaricide, notamment en vue de l'utilisation dans les moquettes et/ou la literie.

La présente invention se rapporte également à l'utilisation non-thérapeutique d'une telle composition dans un produit acarifuge et/ou acaricide.

### Contexte de l'état de la technique

On connaît déjà l'utilisation d'une composition comprenant entre autres des huiles essentielles dans le domaine de l'hygiène. Le brevet Français N° de publication 2 889 909, au nom de Pacchioni Marco et Pacchioni Isabelle, décrit une composition acarifuge et/ou acaricide à base d'huiles essentielles. Selon les observations décrites à la page 8 de ce brevet, le produit selon l'invention a été déposé sur le fond d'une boîte tapissé d'un papier filtre. Ensuite, les acariens ont été posés au centre de la boîte. Les migrations et les mortalités ont été observées tout au plus pendant un laps de temps de 6 heures après introduction de la souche dans les boîtes d'expérimentation. Le désavantage de ce type de produit est que afin de lutter effectivement contre les acariens, le traitement des moquettes nécessairement doit être répété tous les 6 heures.

Il s'ensuit que, quoique le produit testé reste en effet efficace pendant une période de 6 heures après son application sur des moquettes, dans la pratique, les consommateurs sont à la recherche de compositions acarifuges et/ou acaricides, qui gardent leur effet acaricide, resp. acarifuge nettement plus longtemps.

La demande de brevet Français N°. 2 889 90 A1 au nom de Pacchioni Marco en Pacchioni Isabelle décrit une composition acaricide et acarifuge comprenant un alcool phtalaté, des cristaux de menthol et un mélange d'une quarantaine d'huiles essentielles. Le présent objet se distingue de ce document par la nature de l'alcool et des huiles employées.

La demande de brevet Japonais, publiée sous le N°. JP S63 104905 A au nom de Morimoto Yoshiko e.a.a trait à un agent contre les acariens à base d'huiles essentielles ou d'extraits de plantes appartenant à la famille des Cupressaceau, Pinaceae, Taxodiaceae our Myrtaceae. Le présent objet se distingue de ce document par la présence de l'alcool et de la nature des huiles employées.

La demande de brevet Allemand publiée sous le N° DE 198 24 683 A1 au nom de Grewe Helmut F, concerne un spray d'huiles essentielles comprenant préférentiellement un solvant alcoolique pour tuer les acariens. Le présent objet se distingue de ce document par la nature des huiles employées.

D'autres compositions acaricides à base d'huiles essentielles sont proposées dans les demandes de brevet suivants, publiées sous les numéros suivants :
- N° WO 03/015522 A1 au nom de Lee Hoi-Seon ;
- N° JP H04 149107 A au nom de Nihon Terupen Kagaku KK ;
- N° EP 1 249 167 au nom de Takasago Perfumery Co. Ltd. ;
Ainsi que dans la publication de Sertkaya E et al intitulée « Acaricidal activities of the essential oils from several medicinal plants against the carmine spider mite (Tetranychus cinnabarinus Boisd.), Industrial Crops and Products, Elsevier, Nl., vol 31, N° 1, 1 Janvier 2010, ISSN : 0926-66690.

Le présent objet se distingue de ces compositions au moins par la nature des huiles employées.

### Objet

La présente invention vise à solutionner ces problèmes grâce à une composition, également à base d'huiles essentielles, mais qui garde son effet acarifuge et/ou acaricide nettement plus longtemps.

La présente invention se rapporte également à l'utilisation non-thérapeutique d'une telle composition gardant son effet acarifuge et/ou acaricide nettement plus longtemps.

### Brève description

L'invention se rapporte à une composition acaricide et/ou acarifuge nouvelle.

Cette composition est d'origine naturelle et basée essentiellement sur une association de diverses huiles essentielles, des cristaux de menthol en solution, de l'eau osmosée et un alcool.

Plus en particulier la composition selon l'invention comprend l'ensemble des ingrédients suivants :
- Un alcool végétal non-phtalaté;
- Eau osmosée
- Des cristaux de menthol en solution
- Les 41 huiles essentielles suivantes
   1. L'aneth (Anethum graveolens)
   2. l'anis (Pimpinella anisum L.)
   3. Le basilic (Ocimum basilicum)
   4. la Bay St Thomas (Pimenta racemosa)
   5. le Bois de Rose (Cinnamomum Camphora linalooliferum)
   6. le Cajeput (Melaleuca Leucadendron Cajuputi)
   7. la cannelle cassia feu (Cinnamomum cassia)
   8. le cèdre atlas (Cedrus atlantica Manetti)
   9. le citron (Citrus limon)l
   10. la citronelle de java (Cymbopogon Winterianus)
   11. Lemongrass (Cymbopogon Flexuosus)
   12. le cumin (Cuminum cyminum)
   13. le cyprès (Cupressus sempervirens )
   14. l'eucalyptus globuleux (Eucalyptus globulus)
   15. le fenouil doux (Foeniculum Vulgare)
   16. le genévrier (Juniperus communis)
   17. le gingembre (Zingiber officinalis)
   18. le gaultherie wintergreen (Gaultheria procumbens L.)
   19. le géranium (Pelargonium graveolens)
   20. le clous de girofle / (Eugenia Caryophyllus)
   21. la lavande vraie (lavandula angustifolia)
   22. le lavandin grosso (lavandula hybrida grosso)
   23. le macis (Myristica frangrans)
   24. la mandarine (Citrus Nobilis)
   25. la marjolaine (Origanum Majorana)
   26. la melisse (Melissa offiinalis)
   27.la menthe vraie (Mentha Viridis)
   28. la menthe poivrée (Mentha piperita)
   29. la myrrhe (Commiphora myrrha)
   30. le niaouli (Melaleuca viridiflora)
   31. l'orange douce (citrus aurantium dulcis)
   32. l'origan vulgaire (Origanum vulgare)
   33. le persil (Carum Petroselinum)
   34. le petit grain bigaradier (Citrus Aurantium Amara)
   35. le pin sylvestre (Pinus Sylvestris)
   36. le romarin a cineole (Rosmarinus officinalis)
   37. la sarriette (Satureja Hortensis)
   38. la sauge officinale (Salvia officinalis L.)
   39. le serpolet (Thymus Serpyllum L.) l
   40. le tea tree (Melaleuca alternifolia)
   41. le thym thymol (Thymus vulgaris L.)

L'invention a également été décrite dans les revendications indépendantes annexes.

Des modes d'application préférés de l'invention sont décrits dans les revendications dépendantes annexes.

D'autres modes de réalisation préférés et avantages de l'invention sont décrits dans la description suivante.

### Description détaillée

Comme décrit supra, la composition selon l'invention comprend un alcool végétal non-phtalaté (en tant que solvant), de l'eau osmosée, des cristaux de menthol en solution et un ensemble d'huiles essentielles comme indiqué supra.

En particulier, en comparaison avec la composition décrite dans le brevet précité (FR 2 889 909), la composition selon l'invention comprend les modifications suivantes :
- Addition : cristaux de menthol en solution et de l'eau osmosée;
- Substitution : l'alcool phtalaté est remplacé par un alcool végétal non-phtalaté ;
- Substitution : la verveine odorante (Lippia citriodora) est substituée par la citronelle de java (Cymbopogon winterianus Jowitt) ;
- Substitution : la menthe crépue (Mentha spicata linaeus) est substituée par la menthe vraie (mentha viridis leaf oil)
- Substitution : l'orange (Citrus sinensis L.) est substitué par l'orange douce (citrus aurantium dulcis peel oil)
- Substitution : la sariette montagne (Satureia montana L.) est substitué par la sarriette (Satureja Hortensis)
- Augmentation : le pourcentage de Citronelle a été augmenté;
- Diminution : le pourcentage de Baie St. Thomas (Pimenta racemosa) a été diminué;
- Diminution : le pourcentage de Mélisse (Melissa Officinalis) a été diminué;
- Omission de : La verveine odorante (Lippia citridora);

Selon un mode de réalisation préféré de l'invention, le solvant, notamment l'alcool végétal non-phtalaté, représente de 50 à 75 % en poids de la composition selon l'invention, notamment plus de préférence environ de 75 %.

Selon un mode de réalisation préféré de l'invention, l'alcool végétal non-phtalaté est un alcool éthylique d'origine agricole, issu de la fermentation de matière première végétale à l'aide de culture de microorganismes (plus particulier de Saccharomyces cerevisiae), suivie d'étapes de distillations. Plus en particulier, l'alcool compris dans la composition selon l'invention comprend l'éthanol (N° CAS 64-17-5), plus de 96 % v/v, (volume/volume pourcentage), et de l'eau, moins de 5 % v/v. Cette composition alcoholique, comprenant l'éthanol et l'eau, est obtenue à la suite d'une fermentation alcoholique de sucrose, suivie par la distillation sans solvant, 96 %. Les étapes de distillation correspondent à des étapes de séparation ; il s'ensuit que ces étapes de distillation ne modifient pas les caractéristiques du produit. Le sucrose, produit de base pour la fermentation alcoholique, est issu d'un procédé d'extraction de betteraves par un procédé de diffusion de contre-courant sans solvent (95 %).

Selon un mode de réalisation préféré de l'invention, la composition comprend les ingrédients précités dans les proportions suivantes :
( les chiffres indiquent la présence de l'alcool, de l'eau osmosée, des cristaux de menthol en solution et de chaque huile essentielle en pourcentage, exprimé en poids dans la composition entière selon l'invention.)

| Ingrédient | % en poids | |
|---|---|---|
| | min | max |
| Un alcool végétal non-phtalaté | 50 | 75 |
| Eau osmosée | 1 | 5 |
| Cristaux de menthol en solution | 0,1 | 1 |
| L'aneth (Anethum graveolens) | 0,1 | 1 |
| l'anis (Pimpinella anisum L.) | 0,1 | 1 |
| le basilic (Ocimum basilicum) | 0,1 | 1 |
| la Bay St Thomas (Pimenta racemosa) | 0,1 | 1 |
| le Bois de Rose (Cinnamomum Camphora linalooliferum) | 0,1 | 1 |
| le Cajeput (Melaleuca Leucadendron Cajuputi) | 0,1 | 1 |
| la cannelle cassia feu (Cinnamomum cassia) | 0,1 | 1 |
| le cèdre atlas (Cedrus atlantica Manetti) | 0,1 | 1 |
| le citron (Citrus limon) | 1 | 5 |
| la citronelle de java (Cymbopogon Winterianus). | 0,1 | 1 |
| Lemongrass (Cymbopogon Flexuosus) | 0,1 | 1 |
| le cumin (Cuminum cyminum) | 0,1 | 1 |
| le cyprès (Cupressus sempervirens ) | 0,1 | 1 |
| l'eucalyptus globuleux (Eucalyptus globulus) | 5 | 10 |
| le fenouil doux (Foeniculum Vulgare) | 0,1 | 1 |
| le genévrier (Juniperus communis) | 0,1 | 1 |
| le gingembre (Zingiber officinalis) | 0,1 | 1 |
| le gaultherie wintergreen (Gaultheria procumbens L.) | 0,1 | 1 |
| le géranium (Pelargonium graveolens). | 0,1 | 1 |
| le clous de girofle / (Eugenia Caryophyllus) | 0,1 | 1 |
| la lavande vraie (lavandula angustifolia) | 0,1 | 1 |
| le lavandin grosso (lavandula hybrida grosso) | 5 | 10 |
| le macis (Myristica frangrans) | 0,1 | 1 |
| la mandarine (Citrus Nobilis) | 0,1 | 1 |
| la marjolaine (Origanum Majorana) | 0,1 | 1 |
| la melisse (Melissa offiinalis) | 0,1 | 1 |
| la menthe vraie (Mentha Viridis) | 0,1 | 1 |
| la menthe poivrée (Mentha piperita) | 0,1 | 1 |
| la myrrhe (Commiphora myrrha) | 0,1 | 1 |
| le niaouli (Melaleuca viridiflora) | 1 | 5 |
| l'orange douce (citrus aurantium dulcis) | 1 | 5 |
| l'origan vulgaire (Origanum vulgare) | 0,1 | 1 |
| le persil (Carum Petroselinum) | 0,1 | 1 |
| le petit grain bigaradier (Citrus Aurantium Amara) | 0,1 | 1 |
| le pin sylvestre (Pinus Sylvestris) | 1 | 5 |
| le romarin a cineole (Rosmarinus officinalis) | 0,1 | 1 |
| la sarriette (Satureja Hortensis) | 0,1 | 1 |
| la sauge officinale (Salvia officinalis L.) | 0,1 | 1 |
| le serpolet (Thymus Serpyllum L.) | 0,1 | 1 |
| le tea tree (Melaleuca alternifolia) | 0,1 | 1 |
| le thym thymol (Thymus vulgaris L.) | 0,1 | 1 |

La composition selon l'invention se présente sous forme d'un liquide de couleur jaune transparent. Elle peut être remis dans un conditionnement en tant que spray acarifuge et/ou acaricide.

Par eau osmosée on entend l'eau qui a été traitée, resp. filtrée et obtenue par osmose inverse. Suite à ce traitement, l'eau osmosée est pratiquement pure.

La présente invention concerne une composition efficace pour la production de produits acarifuges et/ou acaricide. A la suite des tests décrits infra, les inventeurs ont pu constater que la composition selon l'invention et le produit acarifuge et/ou acaricide contenant cette composition est non seulement très efficace contre les acariens. D'une manière surprenante, les inventeurs ont pu constater que la composition selon l'invention comprend un effet durable contre les acariens.

Aux fins de la présente invention on entend par huile essentielle : une essence volatile extraite de plantes aromatiques ou d'organe de cette plante par la distillation par entraînement à la vapeur d'eau.

Afin de contrôler l'efficacité durable de la composition selon l'invention, les inventeurs ont effectué les tests suivants. Dans ces tests, les inventeurs ont étudié l'effet acarifuge et/ou acaricide d'une composition selon l'invention sur une couche d'acariens, « Dermatophagoides Pteronyssinus », qui vivent dans les moquettes et la literie.

### Objectif des tests:

Le but des tests est de démontrer que l'effet acaricide/acarifuge de la composition selon l'invention est nettement plus long que ce qui avait été initialement prouvé dans les tests décrits dans le brevet précité, notamment le brevet Français N° de publication FR 2 889 909.

### Méthode :

La composition selon l'invention est placée une fois sur un substrat et plusieurs lots d'acariens sont ensuite introduits sur le substrat initialement traité à des intervalles de temps contrôlés entre chaque lots.

L'effet du substrat initialement traité sur les taux de migration et de mortalité de chaque lot d'acariens nouvellement arrivés est noté. En tant que substrat, les tests ont été effectués d'une part sur un tapis à 100 % polyamide, 4.5 mm de chevelure, 1 420 g/m², et d'autre part sur un tissu de textile, plus particulièrement en coton 109 g/m².

La composition selon l'invention était appliquée sur les substrats en forme de spray (aérosol) à 133 g/m².

### Effet acaricide :

Le but des tests est de démontrer combien de temps la zone traitée conserve l'effet de mortalité (acaricide) après l'application.

Cela s'est fait en introduisant de nouveaux acariens vivants à intervalles réguliers pour voir combien de temps l'effet de destruction (acaricide) dure après l'application.

### Effet acarifuge :

Le but des tests est de démontrer combien de temps l'effet répulsif (acarifuge) reste efficace pour repousser tout lot d'acariens nouvellement arrivé.

Pour ce faire, le test est effectué dans une boîte de test plus grande, notamment dans laquelle on montre que les acariens sont repoussés par la zone traitée pendant une durée plus longue.

### Résultat des tests concernant l'effet acaricide :

- Tir direct : 100 % de mortalité en 15 minutes après traitement (et confirmation à 24h)
- Test résiduel sur surfaces (coton, moquette) :
   ∘ à T0 : 100% de mortalité en 30 minutes sur les 2 surfaces (et confirmation à 24h)
   ∘ à T0 + 12 h : 100% de mortalité en 30 minutes sur les 2 surfaces (et confirmation à 24h)
   ∘ à T0 + 24 h : 100% de mortalité en 30 minutes sur les 2 surfaces (et confirmation à 24h)
   ∘ à T0 + 3 jours : : 100% de mortalité en 2 heures sur les 2 surfaces (et confirmation à 24h)
   ∘ à T0 + 5 jours : : 100% de mortalité en 4 heures sur la moquette et 100% mortalité en 2h sur le coton (et confirmation à 24h)
   ∘ à T0 + 7 jours : < 10% de mortalité en 7jours sur les 2 surfaces

### Conclusion activité acaricide :

- En pulvérisation directe, la composition selon l'invention a démontré une efficacité acaricide rapide et définitive 15 min après le traitement. Cet effet est nettement plus rapide en comparaison avec la composition décrite dans le brevet précité;
- En pulvérisation résiduelle, la composition selon l'invention a démontré une efficacité acaricide complète (100%) jusqu'à 5 jours après l'application. Cet effet est nettement plus long en comparaison avec la composition décrite dans le brevet précité.

### Effet acarifuge :

- à T0 : 97% de répulsivité obtenue sur le coton et 98% de répulsivité obtenue sur la moquette
- à T0 + 12h : 92% de répulsivité obtenue sur les 2 surfaces
- à T0 + 24 h : 71% de répulsivité obtenue sur les 2 surfaces.

### Conclusion activité acarifuge :

La composition selon l'invention a démontré une bonne efficacité répulsive contre les acariens dermatophagoides pteronyssinus (> 90%) jusqu'à 12 heures après l'application. 24 heures après le traitement, l'efficacité reste très significative (71%).

Cet effet est nettement plus long en comparaison avec la composition décrite dans le brevet précité.

Pour les deux tests, chaque essai a été réalisé 3 fois et la dose testée était de 1,2ml soit 2 sprays (= mode d'emploi) sur un disque de 14 cm de diamètre.

## Revendications

1. Composition acaricide et/ou acarifuge **caractérisée en ce qu'**elle comprend un alcool végétal non-phtalaté, de l'eau osmosée, des cristaux de menthol en solution et un complexe d'huiles essentielles suivantes :
l'aneth (Anethum graveolens)
l'anis (Pimpinella anisum L.)
le basilic (Ocimum basilicum)
la Bay St Thomas (Pimenta racemosa)
le Bois de Rose (Cinnamomum Camphora linalooliferum)
le Cajeput (Melaleuca Leucadendron Cajuputi)
la cannelle cassia feu (Cinnamomum cassia)
le cèdre atlas (Cedrus atlantica Manetti)
le citron (Citrus limon)l
la citronelle de java (Cymbopogon Winterianus)
Lemongrass (Cymbopogon Flexuosus)
le cumin (Cuminum cyminum)
le cyprès (Cupressus sempervirens )
l'eucalyptus globuleux (Eucalyptus globulus)
le fenouil doux (Foeniculum Vulgare)
le genévrier (Juniperus communis)
le gingembre (Zingiber officinalis)
le gaultherie wintergreen (Gaultheria procumbens L.)
le géranium (Pelargonium graveolens)
le clous de girofle / (Eugenia Caryophyllus)
la lavande vraie (lavandula angustifolia)
le lavandin grosso (lavandula hybrida grosso)
le macis (Myristica frangrans)
la mandarine (Citrus Nobilis)
la marjolaine (Origanum Majorana)
la melisse (Melissa offiinalis)
la menthe vraie (Mentha Viridis)
la menthe poivrée (Mentha piperita)
la myrrhe (Commiphora myrrha)
le niaouli (Melaleuca viridiflora)
l'orange douce (citrus aurantium dulcis)
l'origan vulgaire (Origanum vulgare)
le persil (Carum Petroselinum)
le petit grain bigaradier (Citrus Aurantium Amara)
le pin sylvestre (Pinus Sylvestris)
le romarin a cineole (Rosmarinus officinalis)
la sarriette (Satureja Hortensis)
la sauge officinale (Salvia officinalis L.)
le serpolet (Thymus Serpyllum L.) l
le tea tree (Melaleuca alternifolia)
le thym thymol (Thymus vulgaris L.)

2. Composition suivant la revendication 1, **caractérisée en ce que** le complexe d'huiles essentielles représente entre 25 et 49 % en poids de la composition.

3. Composition suivant la revendication 1 ou 2, **caractérisée en ce qu'**elle comprend l'alcool, l'eau osmosée, les cristaux de menthol en solution et les huiles essentielles précités dans les quantités suivantes en pourcentage en poids de la composition :
| Ingrédient | % en poids | |
|---|---|---|
| | min | max |
| Un alcool végétal non-phtalaté | 50 | 75 |
| Eau osmosée | 1 | 5 |
| Cristaux de menthol | 0,1 | 1 |
| L'aneth (Anethum graveolens) | 0,1 | 1 |
| l'anis (Pimpinella anisum L.) | 0,1 | 1 |
| le basilic (Ocimum basilicum) | 0,1 | 1 |
| la Bay St Thomas (Pimenta racemosa) | 0,1 | 1 |
| le Bois de Rose (Cinnamomum Camphora linalooliferum) | 0,1 | 1 |
| le Cajeput (Melaleuca Leucadendron Cajuputi) | 0,1 | 1 |
| la cannelle cassia feu (Cinnamomum cassia) | 0,1 | 1 |
| le cèdre atlas (Cedrus atlantica Manetti) | 0,1 | 1 |
| le citron (Citrus limon) | 1 | 5 |
| la citronelle de java (Cymbopogon Winterianus). | 0,1 | 1 |
| Lemongrass (Cymbopogon Flexuosus) | 0,1 | 1 |
| le cumin (Cuminum cyminum) | 0,1 | 1 |
| le cyprès (Cupressus sempervirens ) | 0,1 | 1 |
| l'eucalyptus globuleux (Eucalyptus globulus) | 5 | 10 |
| le fenouil doux (Foeniculum Vulgare) | 0,1 | 1 |
| le genévrier (Juniperus communis) | 0,1 | 1 |
| le gingembre (Zingiber officinalis) | 0,1 | 1 |
| le gaultherie wintergreen (Gaultheria procumbens L.) | 0,1 | 1 |
| le géranium (Pelargonium graveolens). | 0,1 | 1 |
| le clous de girofle / (Eugenia Caryophyllus) | 0,1 | 1 |
| la lavande vraie (lavandula angustifolia) | 0,1 | 1 |
| le lavandin grosso (lavandula hybrida grosso) | 5 | 10 |
| le macis (Myristica frangrans) | 0,1 | 1 |
| la mandarine (Citrus Nobilis) | 0,1 | 1 |
| la marjolaine (Origanum Majorana) | 0,1 | 1 |
| la melisse (Melissa offiinalis) | 0,1 | 1 |
| la menthe vraie (Mentha Viridis) | 0,1 | 1 |
| la menthe poivrée (Mentha piperita) | 0,1 | 1 |
| la myrrhe (Commiphora myrrha) | 0,1 | 1 |
| le niaouli (Melaleuca viridiflora) | 1 | 5 |
| l'orange douce (citrus aurantium dulcis) | 1 | 5 |
| l'origan vulgaire (Origanum vulgare) | 0,1 | 1 |
| le persil (Carum Petroselinum) | 0,1 | 1 |
| le petit grain bigaradier (Citrus Aurantium Amara) | 0,1 | 1 |
| le pin sylvestre (Pinus Sylvestris) | 1 | 5 |
| le romarin a cineole (Rosmarinus officinalis) | 0,1 | 1 |
| la sarriette (Satureja Hortensis) | 0,1 | 1 |
| la sauge officinale (Salvia officinalis L.) | 0,1 | 1 |
| le serpolet (Thymus Serpyllum L.) | 0,1 | 1 |
| le tea tree (Melaleuca alternifolia) | 0,1 | 1 |
| le thym thymol (Thymus vulgaris L.) | 0,1 | 1 |

4. Composition selon l'une quelconque des revendications précédentes, **caractérisée en ce que** l'alcool végétal non-phtalaté est un alcool éthylique d'origine agricole.

5. Composition selon la revendication 4, **caractérisée en ce que** l'alcool éthylique d'origine naturelle est un alcool issu d'une fermentation de matière première végétale à l'aide de culture de microorganismes (plus particulier de Saccharomyces cerevisiae), suivie d'étapes de distillations.

6. Composition selon la revendication 5, **caractérisée en ce que** la matière première végétale est le sucrose, plus particulier le sucrose extrait de betteraves sucrières.

7. Composition selon l'une quelconque des revendications précédentes sous forme de spray.

8. Utilisation non-thérapeutique de la composition selon l'une quelconque des revendications 1 à 6, respectivement du spray selon la revendication 7 en tant que produit acarifuge et/ou acaricide.

## Patentansprüche

1. Akarizide und/oder milbenabweisende Zusammensetzung, **dadurch gekennzeichnet, dass** sie einen phthalatfreien Pflanzenalkohol, osmotisiertes Wasser, Mentholkristalle in Lösung und einen Komplex aus folgenden ätherischen Ölen umfasst:
Dill (Anethum graveolens)
Anis (Pimpinella anisum L.)
Basilikum (Ocimum basilicum)
Bay St. Thomas (Pimenta racemosa)
Rosenholz (Cinnamomum camphora linalooliferum)
Cajeput (Melaleuca leucadendron cajuputi)
Feuer-Cassia-Zimt (Cinnamomum cassia)
Atlaszeder (Cedrus atlantica Manetti)
Zitrone (Citrus limon)l
Java-Zitronengras (Cymbopogon winterianus)
Zitronengras (Cymbopogon flexuosus)
Kreuzkümmel (Cuminum cyminum)
Zypresse (Cupressus sempervirens)
Eukalyptus (Eucalyptus globulus)
Süßfenchel (Foeniculum vulgare)
Wacholder (Juniperus communis)
Ingwer (Zingiber officinalis)
Wintergrün (Gaultheria procumbens L.)
Geranie (Pelargonium graveolens)
Gewürznelken / (Eugenia caryophyllus)
echtem Lavendel (Lavandula angustifolia)
Lavandin Grosso (Iavandula hybrida grosso)
Muskatblüte (Myristica fragrans)
Mandarine (Citrus Nobilis)
Majoran (Origanum Majorana)
Zitronenmelisse (Melissa officinalis)
echter Minze (Mentha viridis)
Pfefferminze (Mentha piperita)
Myrrhe (Commiphora myrrha)
Niaouli (Melaleuca viridiflora)
Süßorange (Citrus aurantium dulcis)
gewöhnlichem Oregano (Origanum vulgare)
Petersilie (Carum Petroselinum)
Bitterorangenöl (Citrus aurantium amara)
Waldkiefer (Pinus sylvestris)
Cineol-Rosmarin (Rosmarinus officinalis)
Bohnenkraut (Satureja hortensis)
echtem Salbei (Salvia officinalis L.)
Thymian (Thymus serpyllum L.)l
Teebaum (Melaleuca alternifolia)
Thymian mit Thymol (Thymus vulgaris L.).

2. Zusammensetzung nach Anspruch 1, **dadurch gekennzeichnet, dass** der Komplex aus ätherischen Ölen zwischen 25 und 49 Gewichts-% der Zusammensetzung ausmacht.

3. Zusammensetzung nach Anspruch 1 oder 2, **dadurch gekennzeichnet, dass** sie den Alkohol, das Osmosewasser, die Mentholkristalle in Lösung und die oben genannten ätherischen Öle in den folgenden Mengen, ausgedrückt in Gewichtsprozent der Zusammensetzung, umfasst:
| Bestandteil | Gewichts-% | |
|---|---|---|
| | min. | max. |
| Phthalatfreier Pflanzenalkohol | 50 | 75 |
| Osmotisiertes Wasser | 1 | 5 |
| Mentholkristalle | 0,1 | 1 |
| Dill (Anethum graveolens) | 0,1 | 1 |
| Anis (Pimpinella anisum L.) | 0,1 | 1 |
| Basilikum (Ocimum basilicum) | 0,1 | 1 |
| Bay St. Thomas (Pimenta racemosa) | 0,1 | 1 |
| Rosenholz (Cinnamomum Camphora linalooliferum) | 0,1 | 1 |
| Cajeput (Melaleuca leucadendron cajuputi) | 0,1 | 1 |
| Feuer-Cassia-Zimt (Cinnamomum cassia) | 0,1 | 1 |
| Atlaszeder (Cedrus atlantica Manetti) | 0,1 | 1 |
| Zitrone (Citrus limon) | 1 | 5 |
| Java-Zitronengras (Cymbopogon winterianus). | 0,1 | 1 |
| Zitronengras (Cymbopogon flexuosus) | 0,1 | 1 |
| Kreuzkümmel (Cuminum cyminum) | 0,1 | 1 |
| Zypresse (Cupressus sempervirens) | 0,1 | 1 |
| Eukalyptus (Eucalyptus globulus) | 5 | 10 |
| Süßfenchel (Foeniculum vulgare) | 0,1 | 1 |
| Wacholder (Juniperus communis) | 0,1 | 1 |
| Ingwer (Zingiber officinalis) | 0,1 | 1 |
| Wintergrün (Gaultheria procumbens L.) | 0,1 | 1 |
| Geranie (Pelargonium graveolens). | 0,1 | 1 |
| Gewürznelken / (Eugenia caryophyllus) | 0,1 | 1 |
| Echtem Lavendel (Lavandula angustifolia) | 0,1 | 1 |
| Lavandin Grosso (Lavandula hybrida Grosso) | 5 | 10 |
| Muskatblüte (Myristica fragrans) | 0,1 | 1 |
| Mandarine (Citrus Nobilis) | 0,1 | 1 |
| Majoran (Origanum Majorana) | 0,1 | 1 |
| Zitronenmelisse (Melissa officinalis) | 0,1 | 1 |
| Echter Minze (Mentha viridis) | 0,1 | 1 |
| Pfefferminze (Mentha piperita) | 0,1 | 1 |
| Myrrhe (Commiphora myrrha) | 0,1 | 1 |
| Niaouli (Melaleuca viridiflora) | 1 | 5 |
| Süßorange (Citrus aurantium dulcis) | 1 | 5 |
| Gewöhnlichem Oregano (Origanum vulgare) | 0,1 | 1 |
| Petersilie (Carum Petroselinum) | 0,1 | 1 |
| Bitterorangenöl (Citrus aurantium amara) | 0,1 | 1 |
| Waldkiefer (Pinus sylvestris) | 1 | 5 |
| Cineol-Rosmarin (Rosmarinus officinalis) | 0,1 | 1 |
| Bohnenkraut (Satureja hortensis) | 0,1 | 1 |
| Echtem Salbei (Salvia officinalis L.) | 0,1 | 1 |
| Thymian (Thymus serpyllum L.) | 0,1 | 1 |
| Teebaum (Melaleuca alternifolia) | 0,1 | 1 |
| Thymian mit Thymol (Thymus vulgaris L.) | 0,1 | 1 |

4. Zusammensetzung nach einem der vorstehenden Ansprüche, **dadurch gekennzeichnet, dass** der phthalatfreie Pflanzenalkohol ein Ethylalkohol landwirtschaftlichen Ursprungs ist.

5. Zusammensetzung nach Anspruch 4, **dadurch gekennzeichnet, dass** der Ethylalkohol natürlichen Ursprungs ein Alkohol ist, der durch Fermentation pflanzlicher Rohstoffe unter Verwendung von Mikroorganismenkulturen (insbesondere Saccharomyces cerevisiae) und anschließender Destillation gewonnen wird.

6. Zusammensetzung nach Anspruch 5, **dadurch gekennzeichnet, dass** der pflanzliche Rohstoff Saccharose ist, insbesondere aus Zuckerrüben extrahierte Saccharose.

7. Zusammensetzung nach einem der vorstehenden Ansprüche in Sprayform.

8. Nichttherapeutische Verwendung der Zusammensetzung nach einem der Ansprüche 1 bis 6 bzw. des Sprays nach Anspruch 7 als milbenabweisendes und/oder akarizides Produkt.

## Claims

1. Acaricidal and/or mite-repellent composition **characterised in that** it comprises a non-phthalated vegetable alcohol, osmosed water, menthol crystals in solution and a 5 complex of the following essential oils:
dill (Anethum graveolens)
aniseed (Pimpinella anisum L.)
basil (Ocimum basilicum)
Bay St Thomas (Pimenta racemosa)
rosewood (Cinnamomum Camphora Iinalooliferum)
cajeput (Melaleuca Leucadendron Cajuputi)
fire cassia cinnamon (Cinnamomum cassia)
atlas cedar (Cedrus atlantica Manetti)
lemon (Citrus limon)l
java lemongrass (Cymbopogon Winterianus)
lemongrass (Cymbopogon Flexuosus)
cumin (Cuminum cyminum)
cypress (Cupressus Sempervirens )
globular eucalyptus (Eucalyptus globulus)
sweet fennel (Foeniculum Vulgare)
juniper (Juniperus communis)
ginger (Zingiber officinalis)
wintergreen gaultheria (Gaultheria procumbens L.)
geranium (Pelargonium graveolens)
cloves (Eugenia Caryophyllus)
true lavender (lavandula angustifolia)
iavandin grosso (Iavandula hybrida grosso)
mace (Myristica frangrans)
mandarin (Citrus Nobilis)
marjoram (Origanum Majorana)
melissa (Melissa offiinalis)
true mint (Mentha Viridis)
peppermint (Mentha piperita)
myrrh (Commiphora myrrha)
niaouli (Melaleuca viridiflora)
sweet orange (citrus aurantium dulcis)
oregano (Origanum vulgare)
parsley (Carum Petroselinum)
the little bigaradier grain (Citrus Aurantium Amara)
scots pine (Pinus Sylvestris)
rosemary cineole (Rosmarinus officinalis)
savory (Satureja Hortensis)
sage (Salvia officinalis L.)
the snake (Thymus Serpyllum L.) 1
tea tree (Melaleuca alternifolia)
thyme thymol (Thymus vulgaris L.).

2. Composition according to claim 1, **characterised in that** the essential oil complex represents between 25 and 49% by weight of the composition.

3. Composition according to claim 1 or 2, **characterised in that** it comprises alcohol, osmosed water, menthol crystals in solution and essential oils in the following amounts as a percentage by weight of the composition:
| Ingredient | % by weight | |
|---|---|---|
| | min | max |
| Non-phthalated vegetable alcohol | 50. | 75 |
| Osmosed water | 1. | 5 |
| Menthol crystals | 0.1 | 1. |
| Dill (Anethum graveolens) | 0.1 | 1. |
| Aniseed (Pimpinella anisum L.) | 0.1 | 1. |
| Basil (Ocimum basilicum) | 0.1 | 1. |
| Bay St Thomas (Pimenta racemosa) | 0.1 | 1. |
| Rosewood (Cinnamomum Camphora linalooliferum) | 0.1 | 1. |
| Cajeput (Melaleuca Leucadendron Cajuputi) | 0.1 | 1. |
| Fire cassia cinnamon (Cinnamomum cassia) | 0.1 | 1. |
| Atlas cedar (Cedrus atlantica Manetti) | 0.1 | 1. |
| Lemon (Citrus limon) | 1. | 5 |
| Java lemongrass (Cymbopogon Winterianus). | 0.1 | 1. |
| Lemongrass (Cymbopogon Flexuosus) | 0.1 | 1. |
| Cumin (Cuminum cyminum) | 0.1 | 1. |
| Cypress (Cupressus Sempervirens ) | 0.1 | 1. |
| Globular eucalyptus (Eucalyptus globulus) | 5 | 10. |
| Sweet fennel (Foeniculum Vulgare) | 0.1 | 1. |
| Juniper (Juniperus communis) | 0.1 | 1. |
| Ginger (Zingiber officinalis) | 0.1 | 1. |
| Wintergreen gaultheria (Gaultheria procumbens L.) | 0.1 | 1. |
| Geranium (Pelargonium graveolens). | 0.1 | 1. |
| Cloves (Eugenia Caryophyllus) | 0.1 | 1. |
| True lavender (lavandula angustifolia) | 0.1 | 1. |
| Lavandin grosso (lavandula hybrida grosso) | 5 | 10. |
| Mace (Myristica frangrans) | 0.1 | 1. |
| Mandarin (Citrus Nobilis) | 0.1 | 1. |
| Marjoram (Origanum Majorana) | 0.1 | 1. |
| Melissa (Melissa offiinalis) | 0.1 | 1. |
| True mint (Mentha Viridis) | 0.1 | 1. |
| Peppermint (Mentha piperita) | 0.1 | 1. |
| Myrrh (Commiphora myrrha) | 0.1 | 1. |
| Niaouli (Melaleuca viridiflora) | 1. | 5 |
| Sweet orange (citrus aurantium dulcis) | 1. | 5 |
| Oregano (Origanum vulgare) | 0.1 | 1. |
| Parsley (Carum Petroselinum) | 0.1 | 1. |
| The little bigaradier grain (Citrus Aurantium Amara) | 0.1 | 1. |
| Scots pine (Pinus Sylvestris) | 1. | 5 |
| rosemary cineole (Rosmarinus officinalis) | 0.1 | 1. |
| Savory (Satureja Hortensis) | 0.1 | 1. |
| Sage (Salvia officinalis L.) | 0.1 | 1. |
| The snake (Thymus Serpyllum L.) | 0.1 | 1. |
| Tea tree (Melaleuca altemifolia) | 0.1 | 1. |
| Thyme thymol (Thymus vulgaris L.) | 0.1 | 1. |

4. Composition according to any of the preceding claims, **characterised in that** the non-phthalated vegetable alcohol is an ethyl alcohol of agricultural origin.

5. Composition according to claim 4, **characterised in that** the ethyl alcohol of natural origin is an alcohol derived from a fermentation of plant raw material using culture of microorganisms (more specifically, Saccharomyces cerevisiae), followed by distillation steps.

6. Composition according to claim 5, **characterised in that** the plant raw material is sucrose, more specifically, sucrose extracted from sugar beets.

7. Composition according to any one of the preceding claims in the form of a spray.

8. Non-therapeutic use of the composition according to any one of claims 1 to 6, respectively of the spray according to claim 7 as a mite-repellent and/or acaricidal product.
